# EUROPEAN PATENT APPLICATION

(11) **EP 4 775 834 A2**
(43) Date of publication of application: **15.07.2026**
(21) Application number: 26182358.7
(22) Date of filing: 17.03.2023
(51) Int. Cl.: F03D 13/20

(54) **REINFORCEMENT SYSTEM FOR A TOWER OF A WIND TURBINE, TOWER OF A WIND TURBINE AND METHOD OF REINFORCING A TOWER OF A WIND TURBINE**

(62) Divisional of application: 23382254.3
(71) Applicant: Nordex Energy Spain, S.A.U., 31395 Barasoain (Navarra) (ES)
(72) Inventor: Garcia Maestre, Ivan, Barasoain (ES); Arlabán Gabeiras, Teresa, Barasoain (ES); Teruel Sicart, Arnau, Barcelona (ES); Serna García-Conde, José, Madrid (ES)
(74) Representative: Pons IP

(57) **Abstract**

The present invention relates to a reinforcement system for a tower of a wind turbine that avoids the appearance or propagation of cracks or openings in the surface of a concrete element of the tower of the wind turbine once the tower is subjected to post-tensioning forces, exerting a radial compression force to the concrete element, wherein the invention also relates to a tower of a wind turbine comprising at least one reinforcement system and to a method of reinforcing a tower of a wind turbine.

## Description

### OBJECT OF THE INVENTION

The present invention relates to a reinforcement system for a tower of a wind turbine that increases the resistance of the concrete element wherein is intended to be disposed and additionally avoids the appearance or propagation of cracks or openings, if they are present, in the surface of a concrete element of the tower of the wind turbine once the tower is subjected to post-tensioning forces, exerting a radial compression force to the concrete element.

The invention also relates to a tower of a wind turbine comprising at least one reinforcement system.

Furthermore, the invention relates to a method of reinforcing a tower of a wind turbine.

### BACKGROUND OF THE INVENTION

The evolution of wind power generation technology is currently aimed at designing aerogenerators with increasingly larger power outputs, which implies an increase in the size of the constituent parts of the aerogenerators. The development of higher towers must be carried out taking into account a set of design criteria, such as load, resistance of the material and dynamic performance, in addition to construction, transport and installation conditions.

Towers up to 160 m in height can be manufactured following a full concrete manufacturing method or a hybrid concrete-steel manufacturing method.

In the manufacturing of hybrid concrete-steel towers, the tower comprises a lower tubular tower section made of concrete, an upper tubular tower section made of steel and an adapter for connecting the two tower sections, wherein the adapter can comprise a concrete element and a steel element, the steel element containing at least one flange that covers preferably entirely a surface of the concrete element, said surface being at the top in the installed state.

In the manufacturing of full concrete towers, the tower comprises at least one concrete tower section and an adapter disposed in the upper part of the first concrete tower section and below at least one wind turbine component, preferably the nacelle. The adapter may be in the same form as disclosed for a hybrid tower, connecting the at least one concrete tower section and the at least one wind turbine component.

In both of them, the full concrete tower and the concrete parts of hybrid towers made of steel and concrete are commonly provided with a post-tension system (e.g., cables, tendons, wires, strands...) in order to ensure that the concrete is under compression stresses during the most of the wind turbine lifetime. This however provokes the increase of load to which the concrete element is subjected.

Commonly, the post-tensioning elements (e.g., tendons) are uniformly distributed along the tower perimeter, so that the resultant post-tension force falls approximately in the central axis of the tower, avoiding in this way eccentric forces due to the post-tension system.

However, in many cases an eccentricity of the loads with respect to the axis of the tower wall (tendons) is produced, or simply due to concentrated loads involving radial forces (bolts) would lead to radial vertical cracks in the upper part of the concrete tower (or in the upper part of the concrete part in hybrid towers).

Radial forces give rise to circumferential stresses, which, depending on their magnitude, can cause vertical cracks, loss of stiffness of the structural element, variations of stress flows and fatigue damage.

The reinforcement system and related method of the present solves all the above-mentioned drawbacks.

### DESCRIPTION OF THE INVENTION

The present invention relates to a reinforcement system for a tower of a wind turbine that increases the resistance of the concrete element wherein is intended to be externally disposed and additionally avoids the appearance or propagation, if they are present, of cracks or openings in the surface of a concrete element of the tower of the wind turbine once the tower is subjected to post-tensioning forces.

The reinforcement system is intended to be disposed on a tower of a wind turbine, wherein the tower comprises at least a first concrete element, and wherein the reinforcement system comprises:
at least one strengthening element which surrounds, in use, at least partially the first concrete element wherein the at least one strengthening element is configured to exert a radial compression force to at least a part of the first concrete element.

This increases the resistance of the concrete element wherein the reinforcement system is disposed, externally to the concrete element. Additionally, and in case the first concrete element presents cracks or openings disposed in the surface of at least a part of the first concrete element, the reinforcement system so defined strengthens said part avoiding the propagation of the crack or opening to the rest of the first concrete element, causing damage that can even lead to the collapse of the wind turbine.

In both cases, the circumferential stresses are confined and supported at least in part by means of the reinforcement system defined above, in such a way that the reinforcement system induces radial forces that compensate those coming from the tower.

Optionally, the at least one strengthening element surrounds, in use, at least in a circumferential direction, at least partially the first concrete element. Preferably, the at least one strengthening element comprises at least an essentially cylindrical or frustoconical wall which surrounds, in use, at least partially the first concrete element. In this way, the cylindrical or frustoconical wall acts as a reinforcement sleeve following the external geometry of at least the first concrete element of the tower.

It has to be understood that the circumferential direction makes reference to a circumferential direction contained in a horizontal plane of the first concrete element at a height wherein the at least one strengthening surrounds the first concrete element, wherein the centre of the circumference defining the circumferential direction coincides with the centre of the tower.

Optionally, the cylindrical or frustoconical wall extends, in use, along a first length in a vertical direction of at least a part of the first concrete element.

Optionally, the at least one strengthening element comprises at least two sectors surrounding, in use, at least in the circumferential direction, at least partially the first concrete element. Preferably, the at least one strengthening element comprises four sectors surrounding, in use, at least in the circumferential direction, the first concrete element.

Optionally, the reinforcement system further comprises attaching means configured to attach the at least two sectors of the at least one strengthening element, wherein each one of the at least two sectors comprises first flanges wherein the attaching means are attached. Preferably, each one of the at least two sectors further comprises brackets configured to reinforce the attachment between the at least two sectors.

Optionally, the at least one strengthening element surrounds, in use, at least in a polygonal direction, at least partially the first concrete element. Preferably, the at least one strengthening element comprises at least an essentially vertical polygonal wall which surrounds, in use, in the polygonal direction and in a vertical direction, at least partially the first concrete element.

It has to be understood that the polygonal direction makes reference to a polygonal direction contained in a horizontal plane of the first concrete element at a height wherein the at least one strengthening surrounds the first concrete element, wherein the centre of the polygon defining the polygonal direction coincides with the centre of the tower.

Optionally, the reinforcement system further comprises a temporary or permanent element configured to withstand, in a temporary or permanent way, respectively, the at least one strengthening element. So, the temporary or permanent element provides a support for the at least one strengthening element at least until the at least one strengthening element exerts the radial compression force to at least a part of the first concrete element.

Optionally, the at least one strengthening element embraces, in use, at least partially the first concrete element.

Optionally, the reinforcement system further comprises a non-shrink material disposed in a first gap extending, in use, at least between the at least one strengthening element and the first concrete element. Preferably, the temporary or permanent element also provides a support for the non-shrink material until the non-shrink material has hardened. This is dependent on the geometry of the tower and the manufacturing and assembly tolerances of tower and the at least one strengthening element. Examples not being limitative of a non-shrink material are a layer of resin (thinner) or mortar (thicker) to necessary to ensure contact between the first concrete element and the at least one strengthening element.

Optionally, and as well as the circumferential or polygonal wall, the at least one strengthening element also comprises an essentially horizontal wall which surrounds, in use, emerging from the first concrete element, the first concrete element, in such a way that the non-shrink material is disposed in the first gap on the essentially horizontal wall.

Optionally, the reinforcement system further comprises fixation means configured to fix the at least one strengthening element to at least partially, the first concrete element. Preferably, the fixation means are configured to fix the at least one strengthening element to an external surface of the first concrete element.

Optionally, the reinforcement system further comprises a tensioning system configured to exert a radial compression force to the at least one strengthening element. So, the radial compression force exerted by the tensioning system on the at least one strengthening element is transmitted from the strengthening element to the first concrete element. Preferably, the tensioning system comprises:
- at least one tensioning element with two ends;
- at least an anchoring element configured to receive at least one of the two ends of said tensioning element; and
- at least one fixing element configured to fix the at least one of the two ends of the tensioning element to the at least one anchoring element.

Optionally, the first flanges are configured to fix the position of the at least one tensioning element at a first height in a vertical direction of the at least one strengthening element. Preferably, each first flange comprises at least an opening through which the at least one tensioning element passes through.

Optionally, the reinforcement system comprises several strengthening elements disposed, in use, adjacent in a vertical direction surrounding the at least first concrete element.

Optionally, the at least one or the several strengthening elements surrounds at least the first concrete element in a length, preferably but not limited, of at least between 0.4m and 2m in the vertical direction.

The invention also relates to a tower of a wind turbine comprising at least one reinforcement system as described above.

Optionally, the at least one strengthening element of the at least one reinforcement system covers at least a first tower surface in a region subjected to critical loading or damage. This region subjected to critical loading or damage is a region subjected to stresses concentration. The areas where the stresses, meaning the internal forces within the structure, are the largest, are the most susceptible to damage. Hence, such region subjected to stresses concentration might be, for example, a region including substantial changes in the cross-section dimensions of the structure and/or a substantial change in the properties of the material.

As an example, a region including substantial changes in the cross-section dimensions can be, for instance, a region including and/or being in the vicinity of holes, bolts, tensioning cables, sharp corners, and/or changes in the thickness of the concrete element walls.

As mentioned, this concentration of stresses can be caused for example by a substantial change in the wall thickness of the concrete element (for example substantial change in the wall thickness of the keystones occurring in the vicinity of the horizontal joints) which leads to a decrease in the cross-section, or by radial vertical cracks in the upper section of the concrete tower or in the upper section of the concrete part in hybrid towers, which lead to a change in the material properties occurring during the lifetime of the project.

Optionally, the first concrete element is a first concrete section of the tower. This may be the case of a full-concrete tower, wherein the tower comprises at least one concrete tower section and an adapter disposed in the upper part of the first concrete tower section and below at least one wind turbine component, preferably the nacelle. Preferably, the tower further comprises a second concrete section and a horizontal joint disposed between the first concrete section and the second concrete section, wherein the at least one strengthening element also surrounds, at least partially the horizontal joint and optionally at least partially the second concrete section. In this way, not only the first concrete element but also the horizontal joint and optionally the second concrete section are strengthened by the reinforcement system.

Optionally, the first concrete element is a concrete transition element being part of an adapter. This may be the case of a hybrid concrete-steel tower, wherein the tower comprises the adapter and at least a first steel section. Preferably, the tower further comprises a first concrete section and a horizontal joint disposed between the adapter and the first concrete section, wherein the at least one strengthening element also surrounds, at least partially the horizontal joint and optionally at least partially the first concrete section. The adapter is used as a transition element between the first concrete section with large diameter and the first steel section with smaller diameters. In this way, not only the first concrete element but also the horizontal joint and optionally the first concrete section are strengthened by the reinforcement system. In that case, the adapter serves as a transition between a concrete tower section with large diameters and a steel tower section with smaller diameters.

Optionally, the tower comprises at least two reinforcement systems as described above disposed adjacent or separated along a first length in a vertical direction of the at least a first concrete element.

Optionally, the tower comprises at least two reinforcement systems as described above being at least a first reinforcement system and at least a second reinforcement system, wherein the first reinforcement system is the reinforcement system surrounding at least partially the first concrete element and the second reinforcement system surrounds the second concrete section for the case of the full-concrete tower or the first concrete section for the case of the hybrid concrete-steel tower, respectively.

The invention also relates to a method of reinforcing a tower of a wind turbine, the tower comprising at least a first concrete element;
wherein the method comprises:
- a step of placing at least one strengthening element surrounding, at least partially the first concrete element, in such a way that a radial compression force is exerted to at least a part of the first concrete element.

Optionally, the step of placing at least one strengthening element surrounding, at least partially, the first concrete element, is carried out placing the at least one strengthening element surrounding, at least in a circumferential direction, at least partially the first concrete element. Preferably, the step of placing the at least one strengthening element further comprises a step of placing at least an essentially vertical circumferential wall surrounding, at least in the circumferential direction and in a vertical direction, at least partially the first concrete element.

Optionally, the step of placing at least one strengthening element surrounding, at least partially, the first concrete element, is carried out placing the at least one strengthening element surrounding, at least in a polygonal direction, at least partially the first concrete element. Preferably, the step of placing the at least one strengthening element further comprises a step of placing at least an essentially polygonal wall surrounding, at least in the polygonal direction and in a vertical direction, at least partially the first concrete element.

Optionally, the first concrete element is a first concrete section of the tower, and the step of placing at least one strengthening element surrounding, at least partially the first concrete element, is a step of placing the at least one strengthening element surrounding, at least in a circumferential direction, at least partially the first concrete section. Preferably, the tower further comprises a second concrete section and a horizontal joint disposed between the first concrete section and the second concrete section, and wherein the step of placing at least one strengthening element surrounding, at least partially the first concrete section further comprises a step of placing the at least one strengthening element also surrounding, at least partially the horizontal joint and optionally at least partially the second concrete section.

Optionally, the tower further comprises an adapter and at least a first steel section, wherein the first concrete element is a concrete transition element that is a part of the adapter, and wherein the step of placing at least one strengthening element surrounding, at least partially the first concrete element is a step of placing the at least one strengthening element surrounding, at least partially the concrete transition element of the adapter. Preferably, the tower further comprises a first concrete section and a horizontal joint disposed between the adapter and the first concrete section, and wherein the step of placing at least one strengthening element surrounding, at least partially the first concrete transition element further comprises a step of placing the at least one strengthening element also surrounding, at least partially the horizontal joint and optionally at least partially the first concrete section.

Optionally, the method further comprises a step of temporarily or permanently supporting the at least one strengthening element by means of a temporary or permanent element, respectively.

Optionally, the step of placing at least one strengthening element further comprises a step of leaving a first gap between the at least one strengthening element and the first concrete element. Preferably, the method further comprises a step of filling the first gap with a non-shrink material.

Optionally, and as well as the step of placing at least one strengthening element surrounding, at least partially, the first concrete element, placing the at least one strengthening element surrounding, at least in a circumferential or polygonal direction the first concrete element, the method also comprises placing the at least one strengthening element surrounding and emerging from the first concrete element in an essentially horizontal direction. In this way, the method also comprises a step of filing the at least one strengthening element with a non-shrink material.

Optionally, the step of leaving a first gap between the at least one strengthening element and the first concrete element, the first gap is also left at least partially between the at least one strengthening element and the horizontal joint and optionally between the at least one strengthening element and the second concrete section or the first concrete element, respectively.

Optionally, the method further comprises a step of fixing the at least one strengthening element to at least partially, the first concrete element.

Optionally, the method further comprises a step of tensioning the at least one strengthening element exerting a radial compression force to the at least one strengthening element. In this way, the step of placing at least one strengthening element surrounding, at least partially the first concrete element, in such a way that a radial compression force is exerted to at least a part of the first concrete element comprises the step of tensioning the at least one strengthening element exerting a radial compression force to the at least one strengthening element.

Preferably, the step of tensioning further comprises:
- a step of disposing at least one tensioning element with two ends surrounding at least a part of the at least one strengthening element;
- a step of anchoring at least one of the two ends of the at least one tensioning element; and
- a step of fixing the at least one of the two ends of the tensioning element to the at least one anchoring element.

Optionally, the method further comprises a step of reducing the post-tensioning loads of the tower with regard to rated loads before the step of placing at least one strengthening element.

Optionally, the method further comprises a step of restoring the post-tensioning loads of the tower to the rated loads after the step of placing at least one strengthening element.

### BRIEF DESCRIPTION OF THE DRAWINGS

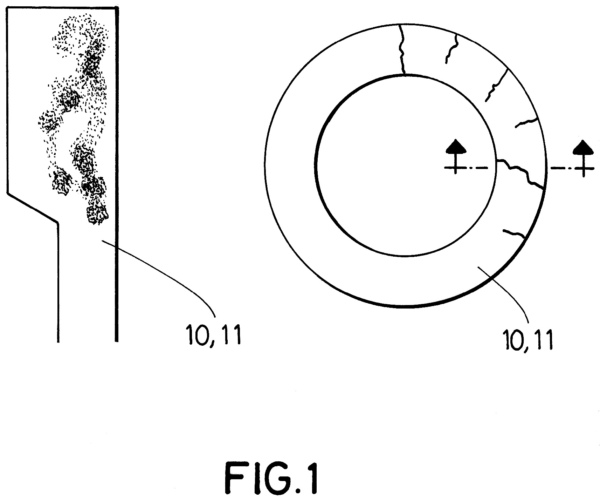

Figure 1 shows on the right side a top view of a first concrete element (first concrete section) showing the radial cracks that take place in a region of the first concrete element (first concrete section) subjected to critical loading or damage before the disposition of the at least one reinforcement system, and on the left side it is shown the upper area of the keystone, section CC, where the radial crack has extended along the keystone in the vertical direction.

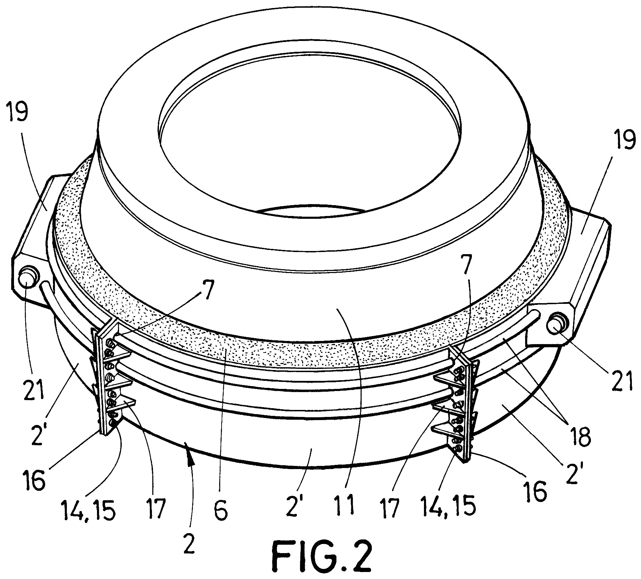

Figure 2 shows a perspective view of the reinforcement system of the present invention comprising at least one strengthening element which surrounds, at least partially the first concrete element, the first concrete element being an adapter.
Figure 3 shows a plan view of the reinforcement system of Figure 2.
Figure 4 shows a section AB of Figure 3 wherein the first gap is filled with the non-shrink material.
Figure 5 shows another embodiment of the reinforcement system of the present invention comprising four sectors.
Figure 6 shows another embodiment of the reinforcement system of the present invention.
Figure 7 shows another embodiment of the reinforcement system of the present invention.
Figure 8 shows another embodiment of the reinforcement system of the present invention.
Figure 9 shows a full concrete tower wherein the reinforcement system of the present invention is disposed surrounding at least partially the first concrete section, the horizontal joint between the first concrete section and the second concrete section and the second concrete section.
Figure 10 shows a hybrid concrete-steel tower wherein the reinforcement system of the present invention is disposed surrounding at least partially the adapter, the horizontal joint between the adapter and the first concrete section and the first concrete section.

### PREFERRED EMBODIMENT OF THE INVENTION

The invention is described in detail as follows. It relates to a reinforcement system for a tower (1) of a wind turbine, the tower (1) comprising at least a first concrete element (10, 11); and
wherein the reinforcement system comprises:
at least one strengthening element (2, 3) which surrounds, in use, at least partially the first concrete element (10, 11), wherein the at least one strengthening element (2, 3) is configured to exert a radial compression force to at least a part of the first concrete element (10, 11).

In the embodiments shown in the Figures, the at least one strengthening element (2, 3) surrounds, in use, at least in a circumferential direction, at least partially the first concrete element (10, 11) and comprises at least an essentially cylindrical or frustoconical wall (2), depending on the geometry of the first concrete element (10, 11), which surrounds, in use, at least partially the first concrete element (10, 11). Other variations in the form of the at least one strengthening element (2, 3) surrounding, in use, at least partially the first concrete element (10, 11) are included in this invention.

Optionally, the at least one strengthening element (2, 3) also comprises an essentially horizontal wall (3) which surrounds, in use, emerging from the first concrete element (10, 11), the first concrete element (10, 11), in such a way that a non-shrink material (6) is disposed in a first gap (5) defined between the first concrete element (10, 11), the essentially horizontal wall (3) and the cylindrical or frustoconical wall (2).

In other embodiments explained below, the non-shrink material (6) is disposed in the first gap (5) defined between the first concrete element (10, 11), a temporary or permanent element (13) and the cylindrical or frustoconical wall (2).

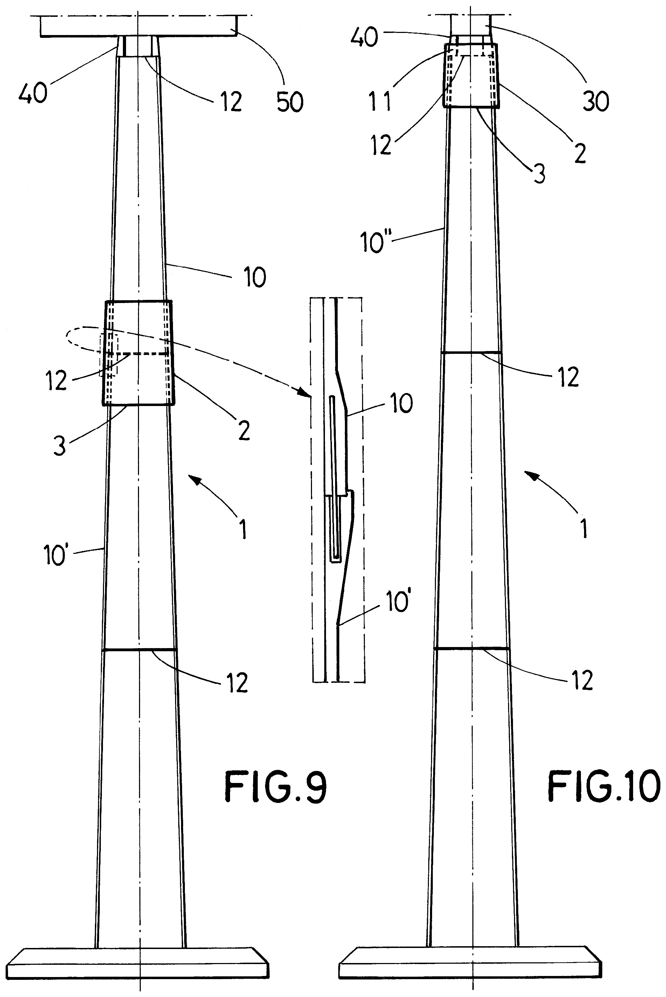

In a first preferred embodiment shown in Figure 9, the first concrete element (10, 11) is a first concrete section (10) of a tower (1) being a full-concrete tower, wherein the tower (1) comprises the first concrete section (10) and an adapter (40) disposed in the upper part of the first concrete section (10) and below at least one wind turbine component (50). The tower further comprises a second concrete section (10') and a horizontal joint (12) disposed between the first concrete section (10) and the second concrete section (10'), wherein the at least one strengthening element (2, 3) also surrounds, at least partially the horizontal joint (12) and optionally at least partially the second concrete section (10').

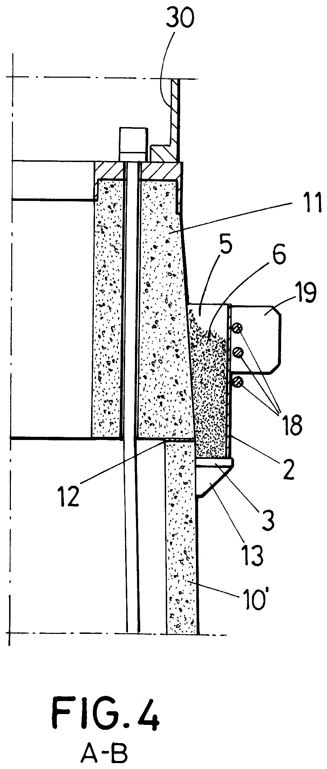

In a second preferred embodiment shown in Figure 10, the first concrete element (10, 11) is a concrete transition element (11), wherein the tower (1) is a hybrid concrete-steel tower comprising an adapter (40) and at least a first steel section (30), wherein the concrete transition element (11) is a part of the adapter (40). The tower further comprises a first concrete section (10") and a horizontal joint (12) disposed between the adapter (40) and the first concrete section (10"), wherein the at least one strengthening element (2, 3) also surrounds, at least partially the horizontal joint (12) and optionally at least partially the first concrete section (10"), as shown in Figure 4.

In the embodiments shown in the Figures, the reinforcement system further comprises a temporary or permanent element (13) configured to support, in a temporary way, the at least one strengthening element (2, 3).

As it can be seen in Figure 4, valid for both of the embodiments described above, the reinforcement system further comprises a non-shrink material (6) disposed in a first gap (5) extending at least between the at least one strengthening element (2, 3) and the first concrete element (10, 11). The non-shrink material (6) may also be disposed in the first gap extending at least partially between the at least one strengthening element (2, 3) and the horizontal joint (12) and between the at least one strengthening element (2, 3) and the second concrete section (10') for the full concrete tower embodiment or the first concrete section (10") for the hybrid concrete-steel tower.

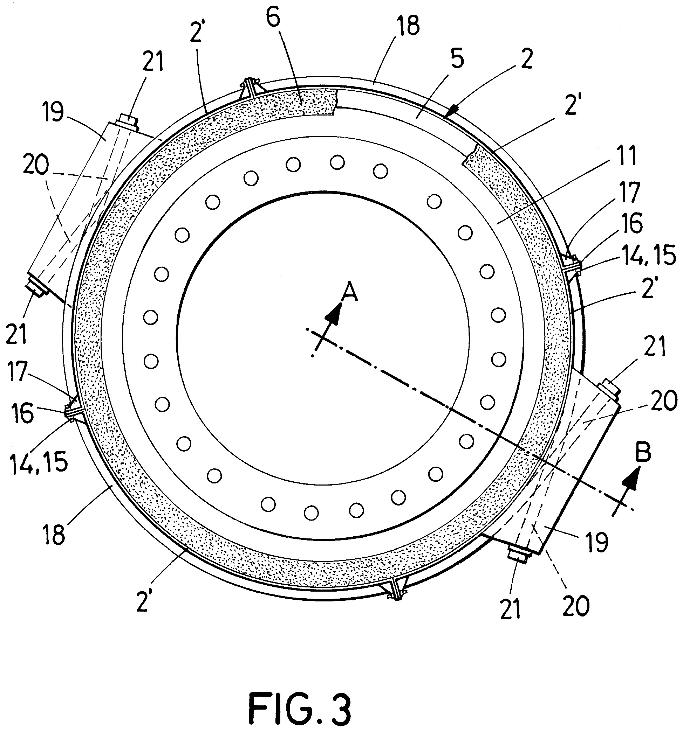

In both of the embodiments, the reinforcement system further comprises a tensioning system configured to exert a radial compression force to the at least one strengthening element (2, 3). As it is shown in Figure 3, the tensioning system may comprise:
- two tensioning elements (18), each one of them with two ends (20);
- two anchoring element (19), each one of them configured to receive the two ends (20) of one tensioning element; and
- one fixing element (21) configured to fix one end (20) of each of the ends (20) of each tensioning element (18) to one anchoring element (19).

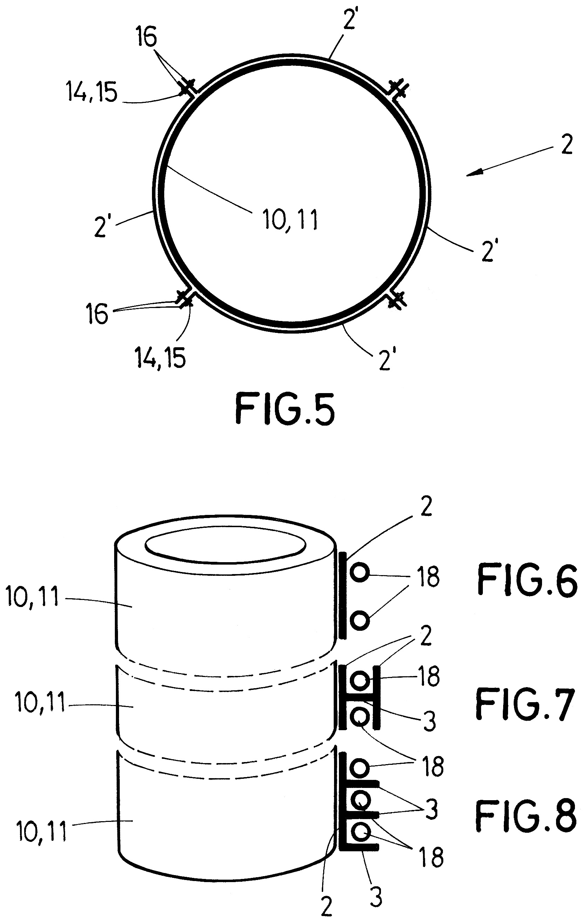

The at least one strengthening element (2, 3) may be metallic or made of carbon fibre. In any case, it must be made of a material that works well under traction. If the at least one strengthening element (2, 3) is metallic, for example a steel strengthening element, it comprises sectors (2') configured to be pre-assembled and joined at the first concrete element (1), as shown in Figure 5. If the reinforcement is made of carbon fibre, it could be laminated in-situ or with already laminated plates to be joined at the first concrete element (1).

In other embodiments of the reinforcement system shown in Figure 6 to 8, the at least one strengthening element (2, 3) comprises a curved H-profile or curved double T-profile (Figure 7), being the cylindrical or frustoconical wall (2) a part of the curved H-profile, in this case the wall, in use, more proximate to the first concrete element (10, 11), or multiple horizontal walls (3) emerging from the cylindrical or frustoconical wall (2), wherein the tensioning elements (18) of the tensioning system are disposed between the horizontal walls (3).

The invention also relates a method of reinforcing a tower (1) of a wind turbine of any of the embodiments described above, the tower (1) comprising at least a first concrete element (10, 11);
wherein the method comprises:
- a step of placing at least one strengthening element (2, 3) surrounding, at least partially the first concrete element (10, 11), in such a way that the at least one strengthening element exerts a radial compression force to at least a part of the first concrete element (10, 11).

In the embodiments shown in the Figures, the step of placing at least one strengthening element (2, 3) surrounding, at least partially, the first concrete element (10, 11), is carried out placing the at least one strengthening element (2, 3) surrounding, at least in a circumferential direction, at least partially the first concrete element (10, 11), more specifically placing at least an essentially vertical circumferential wall (2) surrounding, at least in the circumferential direction and in a vertical direction, at least partially the first concrete element (10, 11).

In the embodiments shown in the Figures, the method further comprises a step of temporarily supporting the at least one strengthening element (2, 3) by means of a temporary or permanent element (13).

In these embodiments, the step of placing at least one strengthening element (2, 3) further comprises a step of leaving a first gap (5) between the at least one strengthening element (2, 3) and the first concrete element (10, 11), not being limitative since the step of placing at least one strengthening element (2, 3) may comprises a step of fixing the at least one strengthening element (2, 3) to at least partially, the first concrete element (10, 11), by means of nuts and bolts, preferably, not leaving a first gap (5) between the at least one strengthening element (2, 3) and the first concrete element (10, 11).

In case the method comprises the step of placing at least one strengthening element (2, 3) leaving a first gap (5) between the at least one strengthening element (2, 3) and the first concrete element (10, 11), the method further comprises a step of filling the first gap (5) with a non-shrink material (6).

As explained above for the reinforcement system and in an equivalent way, in the step of leaving a first gap (5) between the at least one strengthening element (2, 3) and the first concrete element (10, 11), the first gap (5) is also left at least partially between the at least one strengthening element (2, 3) and the horizontal joint (12) and optionally between the at least one strengthening element (2, 3) and the second concrete section (10') or the first concrete element (10'), respectively, for both of the embodiments described above.

Preferably, the at least one strengthening element (2, 3) is disposed in the tower (1) in height, and auxiliary platforms hanging from the wind turbine component capable of rotating are used for the step of placing and that can rotate with it, since the at least one strengthening element (2, 3) preferably covers 360 degrees, i.e., the step of placing at least one strengthening element (2, 3) surrounding, at least partially the first concrete element (10, 11), in such a way that the at least one strengthening element exerts a radial compression force to at least a part of the first concrete element (10, 11) comprises two steps of placing a sector of the at least one strengthening element (2, 3) and a step of rotating the platforms between the two steps of placing a sector of the at least one strengthening element (2, 3).

In a preferred embodiment, the method comprises a step of tensioning the at least one strengthening element (2, 3) exerting a radial compression force to the at least one strengthening element (2, 3), wherein the step of tensioning further comprises:
- a step of disposing four tensioning elements (18), each one of them with two ends (20), surrounding at least a part of the at least one strengthening element (2, 3);
- a step of anchoring the two ends (20) of each tensioning element (18) by means of one anchoring element (19); and
- a step of fixing the two ends (20) of each tensioning element (18) to the respective anchoring elements (19) by means of one fixing element (21).

The method further comprises a step of reducing the post-tensioning loads of the tower (1) with regard to rated loads before the step of placing at least one strengthening element (2, 3) and a step of restoring the post-tensioning loads of the tower (1) to the rated loads after the step of placing at least one strengthening element (2, 3).

## Claims

1. Method of reinforcing a tower (1) of a wind turbine, the tower (1) comprising at least a first concrete element (10, 11);
wherein the method comprises:
- a step of placing at least one strengthening element (2, 3) surrounding, at least partially the first concrete element (10, 11), in such a way that the at least one strengthening element exerts a radial compression force to at least a part of the first concrete element (10, 11); and
- a step of reducing post-tensioning loads of the tower (1) with regard to rated loads before the step of placing at least one strengthening element (2, 3).

2. The method according to claim 1, wherein the step of placing at least one strengthening element (2, 3) surrounding, at least partially the first concrete element (10, 11), is carried out placing the at least one strengthening element (2, 3) surrounding, at least in a circumferential direction, at least partially the first concrete element (10, 11).

3. The method according to claim 2, wherein the step of placing the at least one strengthening element (2, 3) further comprises a step of placing at least an essentially vertical circumferential wall (2) surrounding, at least in the circumferential direction and in a vertical direction, at least partially the first concrete element (10, 11).

4. The method according to any one of preceding claims, wherein the step of placing at least one strengthening element (2, 3) surrounding, at least partially the first concrete element (10, 11), is carried out placing the at least one strengthening element (2, 3) surrounding, at least in a polygonal direction, at least partially the first concrete element (10, 11).

5. The method according to claim 4, wherein the step of placing the at least one strengthening element (2, 3) further comprises a step of placing at least an essentially polygonal wall (2) surrounding, at least in the polygonal direction and in a vertical direction, at least partially the first concrete element (10, 11).

6. The method according to any one of preceding claims, wherein the first concrete element (10, 11) is a first concrete section (10) of the tower (1), and the step of placing at least one strengthening element (2, 3) surrounding, at least partially the first concrete element (10, 11), is a step of placing the at least one strengthening element (2, 3) surrounding, at least in a circumferential direction, at least partially the first concrete section.

7. The method according to any one of preceding claims, wherein the tower further comprises an adapter (40) and at least a first steel section (30), wherein the first concrete element (10, 11) is a concrete transition element (11) that is a part of the adapter (40), and wherein the step of placing at least one strengthening element (2, 3) surrounding, at least partially the first concrete element (10, 11) is a step of placing the at least one strengthening element (2, 3) surrounding, at least partially the concrete transition element (11) of the adapter (40).

8. The method according to any one of preceding claims, further comprising a step of temporarily or permanently supporting the at least one strengthening element (2, 3) by means of a temporary or permanent element (13), respectively.

9. The method according to any one of preceding claims, wherein the step of placing at least one strengthening element (2, 3) further comprises a step of leaving a first gap (5) between the at least one strengthening element (2, 3) and the first concrete element (10, 11).

10. The method according to claim 9 further comprising a step of filling the first gap (5) with a non-shrink material (6).

11. The method according to any one of preceding claims further comprising a step of fixing the at least one strengthening element (2, 3) to at least partially, the first concrete element (10, 11).

12. The method according to any one of preceding claims further comprising a step of tensioning the at least one strengthening element (2, 3) exerting a radial compression force to the at least one strengthening element (2, 3).

13. The method according to any one of preceding claims, further comprising a step of restoring the post-tensioning loads of the tower (1) to the rated loads after the step of placing at least one strengthening element (2, 3).

14. The method according to any one of preceding claims, further comprising a step of sealing at least a crack of the first concrete element (10, 11) before the step of placing at least one strengthening element (2, 3).

15. Tower (1) of a wind turbine comprising at least a first concrete element (10, 11) and at least one reinforcement system comprising:
at least one strengthening element (2, 3) which surrounds, in use, at least partially the first concrete element (10, 11), wherein the at least one strengthening element (2, 3) is configured to exert a radial compression force to at least a part of the first concrete element (10, 11);
wherein on the tower (1) is carried out the method of any of claims 1 to 14.
